# NEUE EUROPÄISCHE PATENTSCHRIFT

(11) **EP 3 519 130 B2**
(45) Veröffentlichungstag und Bekanntmachung des Hinweises auf die Entscheidung über den Einspruch: **29.04.2026**
(45) Hinweis auf die Patenterteilung: 28.09.2022
(21) Anmeldenummer: 18706508.1
(22) Anmeldetag: 21.02.2018
(51) Int. Cl.: B23B 27/10, B23B 27/08, B23B 29/04, B23B 27/04

(54) **STECHSCHWERT**
PARTING BLADE
LAME DE SEPARATION DE TOURNAGE

(30) Priorität: 21.02.2017 DE 102017103520
(43) Veröffentlichungstag der Anmeldung: 07.08.2019
(73) Patentinhaber: Hartmetall-Werkzeugfabrik Paul Horn GmbH, 72072 Tübingen (DE)
(72) Erfinder: KEMMLER, Tobias, 72124 Pliezhausen (DE); LUIK, Matthias, 72766 Reutlingen (DE)
(74) Vertreter: Witte, Weller & Partner Patentanwälte mbB
(86) Internationale Anmeldenummer: PCT/EP2018/054265
(87) Internationale Veröffentlichungsnummer: WO 2018/153907

(56) Entgegenhaltungen:
- EP-A1- 0 507 250
- EP-A1- 2 821 167
- EP-A1- 2 962 796
- EP-A1- 3 023 179
- EP-A1- 3 103 573
- WO-A1-2010/079472
- WO-A1-2012/070046
- WO-A1-2013/132480
- JP-A- H07 227 702
- US-A- 4 558 974
- US-A1- 2001 007 215
- US-A1- 2015 003 924

## Beschreibung

Die vorliegende Erfindung betrifft ein Stechschwert mit zumindest einer austauschbaren Schneidplatte.

Stechschwerter sind Werkzeuge zur spanenden Bearbeitung eines Werkstücks, welche der Gattung der Drehwerkzeuge angehören. Stechschwerter werden insbesondere zum Einstech- und Abstechdrehen verwendet.

Stechschwerter sind typischerweise insbesondere im Schneidenbereich sehr schmal ausgeführt, um möglichst große Einstechtiefen zu ermöglichen, ohne dass es hierbei zu Kollisionen zwischen dem zu bearbeitenden Werkstück und dem Halter des Stechschwerts kommt.

Die Stechschwerter selber werden in eine Stechschwert-Halterung eingespannt, innerhalb derer sie axial verschiebbar sind. Derartige Halterungen werden auch als Spannblöcke oder Grundhalter bezeichnet.

Die Einspannung des Stechschwerts innerhalb der Stechschwert-Halterung erfolgt üblicherweise an zwei parallel zur Längsachse des Stechschwerts verlaufenden Einspannseiten, welche einander gegenüberliegen und sozusagen die Ober- und Unterseite des Stechschwerts bilden. An diesen Einspannseiten hat das Stechschwert jeweils eine parallel zur Längsrichtung verlaufende, abgeschrägte oder keilförmige Einspannfläche zur Einspannung und Längsführung des Stechschwerts innerhalb der Stechschwert-Halterung.

Ein bekanntes Stechschwert weist zwei einander gegenüberliegende und zueinander parallele Längsseiten auf, welche sich zwischen zwei einander gegenüberliegenden Einspannseiten und zwei einander gegenüberliegenden Stirnseiten erstrecken, wobei die Längsseiten und die Einspannseiten parallel zur Längsrichtung des Stechschwerts verlaufen und die Stirnseiten quer zur Längsrichtung des Stechschwerts verlaufen. Jede Einspannseite weist die für Stechschwerter typische abgeschrägte oder keilförmige Einspannfläche zur Einspannung und Längsführung des Stechschwerts in einer Stechschwert-Halterung auf. Das Stechschwert weist des Weiteren eine erste Schneidplatten-Aufnahme auf, welche an einer ersten der beiden Stirnseiten des Stechschwerts angeordnet ist. Zudem weist das Stechschwert eine lösbar in der ersten Schneidplatten-Aufnahme befestigbare Schneidplatte auf. Des Weiteren besitzt das Stechschwert einen in dessen Inneren verlaufenden Kühlmittelkanal, mit Hilfe dessen Kühlmittel in den Schneidplattenbereich transportierbar ist, um die Schneidplatte während des Einsatzes zu kühlen.

Ein derartiges gattungsgemäßes Stechschwert ist bereits aus der EP 3 103 573 A1 bekannt.

Der Kühlmittelkanal des aus der EP 3 103 573 A1 bekannten Stechschwerts endet oberhalb der Schneidplatte. Er ist, genauer gesagt, nicht nur oberhalb der Schneidplatte, sondern auch etwas nach hinten versetzt angeordnet, wobei der den Kühlmittelauslass verlassende Kühlmittelstrahl auf die Schneidkante der Schneidplatte zielt. Trotz der in erster Linie geschickt erscheinenden Anordnung des Kühlmittelauslasses ergeben sich in der Praxis daraus dennoch diverse Nachteile. Zum einen ist der Kühlmittelauslass vergleichsweise weit von der Schneidkante der in das Stechschwert eingespannten Schneidplatte entfernt. Hierdurch verliert der Kühlmittelstrahl bereits einen Großteil seiner kinetischen Energie bis er zu seiner eigentlichen Wirkungsstelle gelangt. Zum anderen hat es sich gezeigt, dass Späne, welche während des Einsatzes des Stechschwerts von dem zu bearbeitenden Werkstück abgetrennt werden, häufig den Kühlmittelauslass verdecken, da die Späne von der Schneide aus betrachtet üblicherweise nach oben hin abfließen. Es ist leicht einzusehen, dass ein Verdecken des Kühlmittelauslasses letztendlich eine unzureichende Kühlung der Schneidplatte zur Folge haben kann. Dies wiederum erhöht den Verschleiß und mindert unter Umständen auch die Bearbeitungsqualität des Werkstücks.

Ein weiteres Stechschwert der oben genannten Art ist aus der DE 81 26 791 U1 bekannt. Bei dem daraus bekannten Stechschwert mündet der Kühlmittelkanal in die Schneidplatten-Aufnahme, so dass die Schneidplatte sozusagen von hinten gekühlt wird. Dies soll eine "Störung" der abfließenden Späne verhindern. Es hat sich jedoch herausgestellt, dass eine derartige indirekte Kühlung der Schneidplatte von ihrer Hinterseite aus ebenfalls von Nachteil ist, da die an der Vorderseite der Schneidplatte angeordnete Schneidkante eine vergleichsweise geringe Kühlung erfährt. Hierdurch ist nicht nur die Schneidkante selbst, sondern auch die sich daran anschließende Spanfläche einer hohen Belastung ausgesetzt.

EP 0 507 250 A1, wenn angesichts der in dieser zitierten US 4 558 974 gelesen, offenbart ein Stechschwert, das die Grundlage für den Oberbegriff des unabhängigen Anspruchs 1 bildet.

Vor diesem Hintergrund ist es eine Aufgabe der vorliegenden Erfindung, ein alternatives Stechschwert anzugeben, bei dem insbesondere der Aspekt der Kühlmittelzufuhr an die Schneidplatte besser gelöst ist.

Erfindungsgemäß wird dies durch ein Stechschwert mit den Merkmalen des unabhängigen Anspruchs 1 gelöst. Der Kühlmittelkanal des erfindungsgemäßen Stechschwerts weist einen ersten Kanalteil auf, welcher sich zwischen einer Haltereinlassöffnung, die an einer der beiden Längsseiten angeordnet ist, und einer Halterauslassöffnung, die in die erste Schneidplatten-Aufnahme mündet, erstreckt. Der Kühlmittelkanal weist einen zweiten Kanalteil auf, welcher sich im Inneren der Schneidplatte zwischen einer Schneidplatteneinlassöffnung und einer Schneidplattenauslassöffnung erstreckt, wobei die Halterauslassöffnung und die Schneidplatteneinlassöffnung einander zumindest teilweise überlappen, so dass der erste Kanalteil unmittelbar in den zweiten Kanalteil übergeht, wenn die Schneidplatte in der ersten Schneidplatten-Aufnahme befestigt ist. Die erste Schneidplatten-Aufnahme weist eine obere Klemmbacke zur Anlage an einer Oberseite der Schneidplatte sowie eine untere Klemmbacke zur Anlage an einer der Oberseite gegenüberliegenden Unterseite der Schneidplatte auf. Die Schneidplatte weist eine halterseitige Stirnseite und eine gegenüberliegende werkstückseitige Stirnseite auf, welche jeweils quer zu der Oberseite und der Unterseite der Schneidplatte verlaufen, wobei eine Schneide der Schneidplatte am Übergang zwischen der Oberseite und der werkstückseitigen Stirnseite angeordnet ist, wobei die Schneidplatte mit der Oberseite, der Unterseite und der halterseitigen Stirnseite an der ersten Schneidplatten-Aufnahme anliegt, wenn die Schneidplatte in der ersten Schneidplatten-Aufnahme befestigt ist, und wobei die Schneidplatteneinlassöffnung an der halterseitigen Stirnseite der Schneidplatte angeordnet ist. Der zweite Kanalteil ist gekrümmt ausgestaltet oder weist zwei abgewinkelte Teilabschnitte auf.

Unter der halterseitigen Stirnseite wird eine Seite der Schneidplatte verstanden, welche quer zu der Oberseite und der Unterseite der Schneidplatte verläuft und einer werkstückseitigen Stirnseite der Schneidplatte gegenüberliegt, welche dadurch definiert ist, dass die Hauptschneidkante der Schneidplatte am Übergang zwischen der Oberseite und der werkstückseitigen Stirnseite angeordnet ist.

Anders als bei den aus dem Stand der Technik bekannten Stechschwertern verläuft also ein Teil des Kühlmittelkanals bei dem erfindungsgemäßen Stechschwert durch die Schneidplatte hindurch. Dies ermöglicht eine vergleichsweise schneidennahe Kühlung. Hierdurch wird neben einem verbesserten Kühleffekt auch eine bessere Schmierung erreicht. Dies wiederum reduziert den Kolbverschleiß und mindert die Belastung der Spanfläche der Schneidplatte.

Gemäß einer bevorzugten Ausgestaltung weist die Schneidplatte des erfindungsgemäßen Stechschwerts eine Schneidkante und eine sich daran anschließende Spanfläche auf, wobei die Schneidplattenauslassöffnung in der Spanfläche angeordnet ist.

Dies bietet den Vorteil, dass das Kühlmittel unter den Span gelangt, wodurch die Spanfläche einer noch geringeren Belastung ausgesetzt wird.

Es sei angemerkt, dass sich die Spanfläche je nach Design der Schneidplatte nicht zwangsläufig unmittelbar an die Schneidkante anschließt. Unter einer sich an die Schneidkante anschließenden Spanfläche wird vorliegend daher nicht nur eine sich unmittelbar an die Schneidkante anschließende Spanfläche verstanden, sondern auch eine lediglich in der Nähe der Schneidkante angeordnete Spanfläche, welche durch eine oder mehrere Freiflächen von der Schneidkante getrennt ist. Bei der Spanfläche selbst handelt es sich vorzugsweise um eine im Wesentlichen muldenförmige bzw. konkav geformte Fläche.

Vorzugsweise ist die erste Schneidplatten-Aufnahme und damit auch die darin befestigte Schneidplatte sowie die an der Schneidplatte vorgesehene Schneidplattenauslassöffnung näher an einer ersten der beiden Einspannseiten als an einer zweiten der beiden Einspannseiten angeordnet, wohingegen die Haltereinlassöffnung näher an der zweiten Einspannseite als an der ersten Einspannseite angeordnet ist.

Die Oberseite und Unterseite der Schneidplatte verlaufen vorzugsweise im Wesentlichen parallel zueinander.

Gemäß der Erfindung ist die Schneidplatten-Einlassöffnung an der halterseitigen Stirnseite der Schneidplatte angeordnet. Demnach erfolgt die Übergabe des Kühlmittels zwischen Halter und Schneidplatte auf der dem zu bearbeitenden Werkstück abgewandten Hinterseite der Schneidplatte (vorliegend "halterseitige Stirnseite der Schneidplatte" genannt).

Im Vergleich zu dem Stechschwert des Stands der Technik, bei dem das Kühlmittel auf der Unterseite in die Schneidplatte eintritt, hat die erfindungsgemäße Ausgestaltung mit der an der halterseitigen Stirnseite angeordneten Schneidplatteneinlassöffnung den Vorteil, dass der erste Kanalteil nicht aus mehreren, zueinander abgewinkelten Teilabschnitten hergestellt sein muss, sondern gerade ausgestaltet sein kann. Dies vereinfacht die Herstellung des ersten Kanalteils.

Erfindungsgemäß ist der im Inneren der Schneidplatte vorgesehene zweite Kanalteil gekrümmt ausgestaltet oder weist zumindest zwei zueinander abgewinkelte Teilabschnitte auf, damit sich das Kühlmittel von der an der halterseitigen Stirnseite angeordneten Schneidplatteneinlassöffnung an die vorzugsweise in der Spanfläche angeordnete Schneidplattenauslassöffnung führen lässt.

Das Stechschwert ist, wie bereits erwähnt, vorzugsweise sehr schmal ausgestaltet. Das heißt, dass eine als Abstand zwischen den beiden Einspannseiten gemessene Höhe des Stechschwerts mindestens doppelt so groß ist wie eine als Abstand zwischen den beiden Längsseiten gemessene Breite des Stechschwerts.

Des Weiteren ist es bevorzugt, dass das erfindungsgemäße Stechschwert nicht nur eine erste Schneidplatten-Aufnahme, sondern auch eine zweite Schneidplatten-Aufnahme aufweist, welche an einer zweiten der beiden Stirnseiten des Stechschwerts angeordnet ist. Vorzugsweise ist das Stechschwert bezüglich eines Mittelpunkts punktsymmetrisch ausgestaltet. Bei Verschleiß der ersten Schneidplatten-Aufnahme lässt sich das Stechschwert daher also um 180° um seine Querachse wenden, um es dann mit einer in die zweite Schneidplatten-Aufnahme eingesetzten Schneidplatte in gleicher Weise erneut zu verwenden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine perspektivische Ansicht des erfindungsgemäßen Stechschwerts gemäß einem Ausführungsbeispiel;
- Fig. 2: eine Seitenansicht des in Fig. 1 gezeigten Stechschwerts;
- Fig. 3: eine Schnittansicht des Ausführungsbeispiels des erfindungsgemäßen Stechswerts; und
- Fig. 4: eine perpespektivische Ansicht des erfindungsgemäßen Stechswerts inklusiv Stechschwert-Halterung, in der es eingespannt ist.

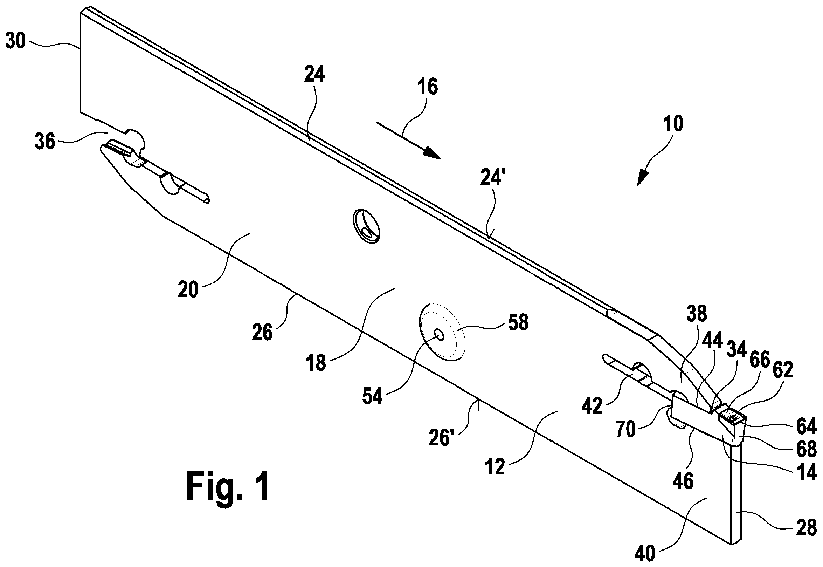

Die Fig. 1-3 zeigen ein Ausführungsbeispiel des erfindungsgemäßen Stechschwerts. Das Stechschwert ist in den Zeichnungen jeweils gesamthaft mit der Bezugsziffer 10 bezeichnet.

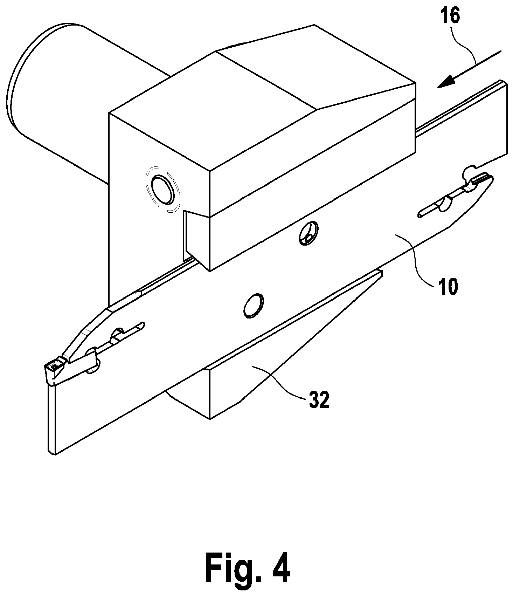

Das Stechschwert 10 weist einen Halter 12 und eine darin einspannbare Schneidplatte 14 auf. Der Halter 12 ist vorzugsweise plattenförmig ausgestaltet und erstreckt sich im Wesentlichen entlang einer Längsrichtung 16, welche in Fig. 1 anhand eines Pfeiles dargestellt ist. Der Halter 12 ist vorzugsweise, jedoch nicht notwendigerweise punktsymmetrisch bezüglich eines Halter-Mittelpunkts 18 ausgestaltet. In den in Fig. 1-5 gezeigten Ausführungsbeispielen des Stechschwerts 10 können somit zwei Schneidplatten in den Halter 12 eingespannt werden. In der Praxis erfolgt dies jedoch üblicherweise nicht gleichzeitig, sondern hintereinander, so dass bei Verschleiß einer Schneidplatte 14 und der zugehörigen Seite des Stechschwerts 10 das Stechschwert um 180° rotiert werden kann und mit einer neuen, auf der gegenüberliegenden Seite eingespannten Schneidplatte erneut verwendbar ist.

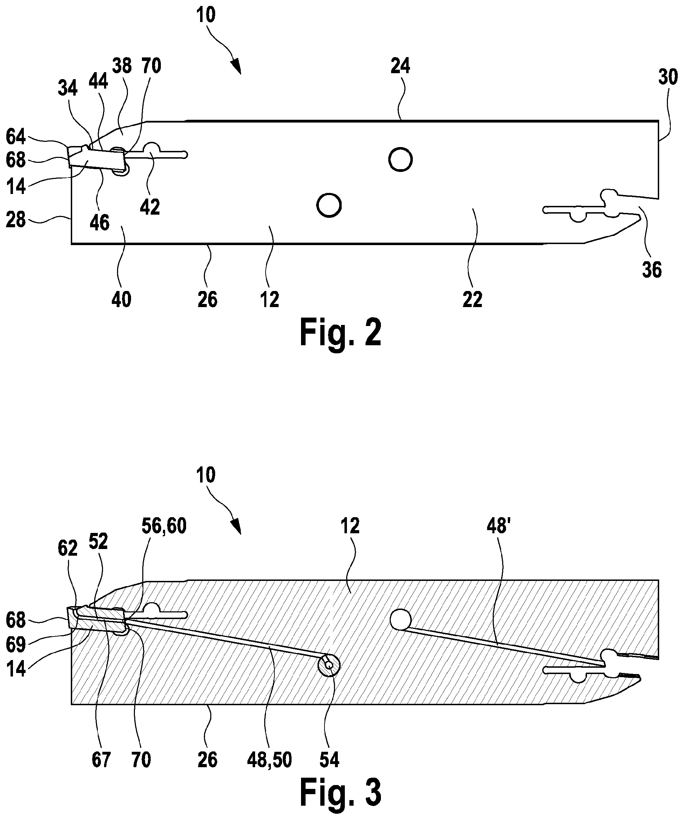

Der Stechschwert-Halter 12 weist zwei einander gegenüberliegende und zueinander parallele Längsseiten auf. Eine erste der beiden Längsseiten, welche in Fig. 1 sichtbar ist, ist mit der Bezugsziffer 20 gekennzeichnet. Eine zweite der beiden Längsseiten, welche insbesondere in Fig. 2 ersichtlich ist, ist mit der Bezugsziffer 22 gekennzeichnet. Beide Längsseiten 20, 22 verlaufen parallel zur Längsrichtung 16 des Stechschwerts 10.

Die Längsseiten 20, 22 erstrecken sich zwischen zwei einander gegenüberliegenden Einspannseiten 24, 26 und zwei einander gegenüberliegenden Stirnseiten 28, 30, wobei die Einspannseite 24 als erste Einspannseite bezeichnet wird, die Einspannseite 26 als zweite Einspannseite bezeichnet wird, die Stirnseite 28 als erste Stirnseite bezeichnet wird und die Stirnseite 30 als zweite Stirnseite bezeichnet wird. Die Einspannseiten 24, 26 verlaufen jeweils parallel zur Längsrichtung 16 des Stechschwerts 10. Die Stirnseiten 28, 30 verlaufen dagegen quer, also nicht parallel zur Längsrichtung 16 des Stechschwerts 10. Teile der Stirnseiten 28, 30 verlaufen vorzugsweise sogar orthogonal zur Längsrichtung 16 des Stechschwerts 10.

Die beiden Einspannseiten 24, 26 weisen jeweils eine abgeschrägte oder keilförmige Einspannfläche 24', 26' auf. Die Einspannflächen 24', 26' verlaufen also nicht senkrecht zu den Längsseiten 20, 22, sondern unter einem Winkel ungleich 90°. Im Querschnitt betrachtet sind die Einspannflächen 24', 26'jeweils dreieckig, trapezförmig oder prismatisch ausgestaltet. Die Einspannflächen 24', 26' dienen der Einspannung und Längsführung des Stechschwerts 10. Fig. 6 zeigt eine beispielhafte Einspannung des Stechschwerts 10 innerhalb einer Stechschwert-Halterung 32. An der Stechschwert-Halterung 32 vorgesehene abgeschrägte Flächen kontaktieren bei dieser Art der Einspannung die am Stechschwert 10 vorgesehenen Einspannflächen 24', 26', so dass das Stechschwert senkrecht zur Längsrichtung 16 in der Stechschwert-Halterung 32 verkeilt ist. Wird die Stechschwert-Halterung 32 etwas gelöst, lässt sich das Stechschwert 10 jedoch einfach entlang der Längsrichtung 16 axial einstellen.

Die Schneidplatte 14 ist, wie beispielsweise in Fig. 1 und 2 ersichtlich, in einer am Halter 12 vorgesehenen Schneidplatten-Aufnahme 34 lösbar befestigt. Da gemäß dem vorliegenden Ausführungsbeispiel am Halter 12 noch eine zweite Schneidplatten-Aufnahme 36 vorgesehen ist, werden die beiden Schneidplatten-Aufnahmen 34, 36 zu deren Differenzierung vorliegend als erste Schneidplatten-Aufnahme 34 und zweite Schneidplatten-Aufnahme 36 bezeichnet. Die erste Schneidplatten-Aufnahme 34 ist an der ersten Stirnseite 28 des Halters 12 angeordnet und die zweite Schneidplatten-Aufnahme 36 ist an der zweiten Stirnseite 30 des Halters 12 angeordnet. Beide Schneidplatten-Aufnahmen 34, 36 sind identisch aufgebaut, weshalb deren Aufbau nachfolgend lediglich anhand der ersten Schneidplatten-Aufnahme 34 erläutert wird.

Die Schneidplatten-Aufnahme 34 weist eine obere Klemmbacke 38 sowie eine untere Klemmbacke 40 auf. Die obere Klemmbacke 38 lässt sich vorzugsweise zumindest teilweise elastisch mit Hilfe eines Werkzeugschlüssels aufspreizen, um die Schneidplatte 14 austauschen zu können. Hierzu ist zwischen der oberen Klemmbacke 38 und der unteren Klemmbacke 40 ein Spannschlitz 42 vorgesehen. Die untere Klemmbacke 40 ist vorzugsweise starr ausgestaltet. In eingespanntem Zustand liegt die Schneidplatte 14 also mit ihrer Oberseite 44 an der oberen Klemmback 38 sowie mit ihrer Unterseite 46 an der unteren Klemmbacke 40 an.

Zur Kühlung und Schmierung weist das erfindungsgemäße Stechschwert einen internen Kühlmittelkanal 48 auf, welcher teilweise durch den Halter 12 und teilweise durch das Innere der Schneidplatte 14 verläuft. Genauer gesagt, weist das Stechschwert 10 gemäß dem vorliegend gezeigten Ausführungsbeispiel der Punktsymmetrie entsprechend nicht nur einen, sondern zwei Kühlmittelkanäle 48, 48' auf. Aufgrund ihrer Identität wird nachfolgend jedoch lediglich einer der beiden Kühlmittelkanäle 48, 48' näher erläutert.

Der durch den Halter 12 verlaufende Teil des Kühlmittelkanals 48 wird vorliegend als erster Kanalteil 50 bezeichnet. Der durch das Schneidplatten-Innere verlaufende Teil des Kühlmittelkanals 48 wird vorliegend als zweiter Kanalteil 52 bezeichnet. Der erste Kanalteil 50 erstreckt sich zwischen einer Haltereinlassöffnung 54 und einer Halterauslassöffnung 56. Die Haltereinlassöffnung 54 ist auf einer der beiden Längsseiten 20, 22 des Stechschwerts 10 vorgesehen (siehe Fig. 1). Vorzugsweise ist die Haltereinlassöffnung 54 nicht direkt in den Halter 12 eingebracht, sondern in einem Stopfen 58 vorgesehen, der in einer am Halter 12 vorgesehenen Bohrung befestigt ist. Die Halterauslassöffnung 56 mündet dagegen in die erste Schneidplatten-Aufnahme 34 des Halters 12.

Der zweite Kanalteil 52 des Kühlmittelkanals 48 erstreckt sich zwischen einer Schneidplatteneinlassöffnung 60 und einer Schneidplattenauslassöffnung 62. Die Schneidplatteneinlassöffnung 60 überlappt in montiertem Zustand der Schneidplatte 14 zumindest teilweise die Halterauslassöffnung 56, so dass der erste Kanalteil 50 unmittelbar in den zweiten Kanalteil 52 übergeht. Vorzugsweise sind die Halterauslassöffnung 56 und die Schneidplatteneinlassöffnung 60 konzentrisch zueinander angeordnet und überlappen sich vollständig. Die auf der anderen Seite des zweiten Kanalteils 52 angeordnete Schneidplattenauslassöffnung 62 ist vorzugsweise in einer an die Hauptschneidkante 64 der Schneidplatte 14 angrenzenden Spanfläche 66 angeordnet (siehe Fig. 1). Diese Spanfläche 66 ist vorzugsweise konkav bzw. muldenförmig ausgestaltet.

Durch die in der Spanfläche 66 vorgesehene Schneidplattenauslassöffnung 62 kann Kühlmittel also direkt unter den abgehobenen Span gelangen und somit eine optimale Kühlung erzielen. Durch die Nähe zur Hauptschneidkante 64 wird ferner eine optimale Schmierung erreicht.

In dem in Fig. 3 gezeigten Ausführungsbeispiel ist auf der ersten Längsseite 20 des Halters 12 die Haltereinlassöffnung 54 vorgesehen und in der Spanfläche 66 der Schneidplatte 14 die Schneidplattenauslassöffnung 62 angeordnet. Es sei jedoch erwähnt, dass, wenngleich dies für das gezeigte Ausführungsbeispiel der Fall ist, die Schneidplattenauslassöffnung 62 nicht zwangsläufig in der Spanfläche 66 vorgesehen sein muss, sondern auch an einer anderen Stelle der Schneidplatte 14 angeordnet sein kann, ohne den Rahmen der vorliegenden Erfindung zu verlassen. Beispielsweise ist auch eine Anordnung unterhalb der Hauptschneidkante 64 an der werkstückseitigen Stirnseite 68 der Schneidplatte 14 denkbar.

Bei dem in Fig. 3 gezeigten Ausführungsbeispiel ist der im Halter 12 befindliche erste Kanalteil 50 gerade, also ungekrümmt ausgeführt. Der in der Schneidplatte 14 befindliche zweite Kanalteil 52 ist dagegen gekrümmt oder abgewinkelt ausgestaltet. Der zweite Kanalteil 52 weist, genauer gesagt, einen ersten geraden Teilabschnitt 67 und einen zweiten gekrümmten oder dazu abgewinkelten Teilabschnitt 69 auf. Beide Teilabschnitte 67, 69 des zweiten Kanalteils 52 gehen unmittelbar ineinander über.

Der Übergang zwischen dem ersten Kanalteil 50 und dem zweiten Kanalteil 52 ist gemäß diesem Ausführungsbeispiel im Grund der Schneidplatten-Aufnahme 34 vorgesehen. Die Schneidplatteneinlassöffnung 60 ist auf einer der werkstückseitigen Stirnseite 68 der Schneidplatte 14 gegenüberliegenden halterseitigen Stirnseite 70 angeordnet. Die Übergabe des Kühlmittels zwischen Halter 12 und Schneidplatte 14 erfolgt gemäß der in Fig. 3 gezeigten Ausgestaltung also auf der dem zu bearbeitenden Werkstück abgewandten Hinterseite der Schneidplatte 14, welche vorliegend als halterseitige Stirnseite 70 bezeichnet wird.

Der erste Kanalteil 50 verläuft bei dem in Fig. 3 gezeigten Ausführungsbeispiel schräg von unten nach oben. Die Haltereinlassöffnung 54 ist vergleichsweise näher an der zweiten Einspannseite 26 als an der ersten Einspannseite 24 angeordnet. Die erste Schneidplatten-Aufnahme 34, in welche die Halterauslassöffnung 56 mündet, ist dagegen vergleichsweise näher an der ersten Einspannseite 24 als an der zweiten Einspannseite 26 angeordnet.

## Patentansprüche

1. Stechschwert (10), umfassend:
zwei einander gegenüberliegende und zueinander parallele Längsseiten (20, 22), welche sich zwischen zwei einander gegenüberliegenden Einspannseiten (24, 26) und zwei einander gegenüberliegenden Stirnseiten (28, 30) erstrecken, wobei die Längsseiten (20, 22) und die Einspannseiten (24, 26) parallel zur Längsrichtung (16) des Stechschwerts (10) verlaufen und die Stirnseiten (28, 30) quer zur Längsrichtung (16) des Stechschwerts (10) verlaufen, wobei jede Einspannseite (24, 26) zumindest eine parallel zur Längsrichtung (16) verlaufende, abgeschrägte oder keilförmige Einspannfläche (24', 26') zur Einspannung und Längsführung des Stechschwerts (10) in einer Stechschwert-Halterung (32) aufweist,
eine erste Schneidplatten-Aufnahme (34), welche an einer ersten der beiden Stirnseiten (28, 30) des Stechschwerts (10) angeordnet ist,
eine lösbar in der ersten Schneidplatten-Aufnahme (34) befestigbare Schneidplatte (14),
ein Kühlmittelkanal (48), mit einem ersten Kanalteil (50), welcher sich zwischen einer Haltereinlassöffnung (54), die an einer der beiden Längsseiten (20, 22) angeordnet ist, und einer Halterauslassöffnung (56), die in die erste Schneidplatten-Aufnahme (34) mündet, erstreckt, und mit einem zweiten Kanalteil (52), welcher sich im Inneren der Schneidplatte (14) zwischen einer Schneidplatteneinlassöffnung (60) und einer Schneidplattenauslassöffnung (62) erstreckt, wobei die Halterauslassöffnung (56) und die Schneidplatteneinlassöffnung (60) einander zumindest teilweise überlappen, so dass der erste Kanalteil (50) unmittelbar in den zweiten Kanalteil (52) übergeht, wenn die Schneidplatte (14) in der ersten Schneidplatten-Aufnahme (34) befestigt ist,
wobei die erste Schneidplatten-Aufnahme (34) eine obere Klemmbacke (38) zur Anlage an einer Oberseite (44) der Schneidplatte (14) sowie eine untere Klemmbacke (40) zur Anlage an einer der Oberseite (44) gegenüberliegenden Unterseite (46) der Schneidplatte (14) aufweist,
wobei die Schneidplatte (14) eine halterseitige Stirnseite (70) und eine gegenüberliegende werkstückseitige Stirnseite (68) aufweist, welche jeweils quer zu der Oberseite (44) und der Unterseite (46) der Schneidplatte (14) verlaufen, wobei eine Schneide (64) der Schneidplatte (14) am Übergang zwischen der Oberseite (44) und der werkstückseitigen Stirnseite (68) angeordnet ist,
**dadurch gekennzeichnet, dass** die Schneidplatte (14) mit der Oberseite (44), der Unterseite (46) und der halterseitigen Stirnseite (70) an der ersten Schneidplatten-Aufnahme (34) anliegt, wenn die Schneidplatte (14) in der ersten Schneidplatten-Aufnahme (34) befestigt ist, wobei der zweite Kanalteil (52) gekrümmt ausgestaltet ist oder zwei zueinander abgewinkelte Teilabschnitte (67, 69) aufweist, und wobei die Schneidplatteneinlassöffnung (60) an der halterseitigen Stirnseite (70) der Schneidplatte (14) angeordnet ist.

2. Stechschwert gemäß Anspruch 1, wobei die Schneidplatte (14) eine Schneidkante (64) und eine sich daran anschließende Spanfläche (66) aufweist, wobei die Schneidplattenauslassöffnung (62) in der Spanfläche (66) angeordnet ist.

3. Stechschwert gemäß Anspruch 1 oder 2, wobei die erste Schneidplatten-Aufnahme (34) näher an einer ersten der beiden Einspannseiten (24) als an einer zweiten der beiden Einspannseiten (26) angeordnet ist, und wobei die Haltereinlassöffnung (54) näher an der zweiten Einspannseite (26) als an der ersten Einspannseite (24) angeordnet ist.

4. Stechschwert gemäß einem der Ansprüche 1-3, wobei der erste Kanalteil (50) gerade ausgestaltet ist.

5. Stechschwert gemäß Anspruch 4, wobei der zweite Kanalteil (52) einen ersten geraden Teilabschnitt (67) und einen zweiten gekrümmten oder abgewinkelten Teilabschnitt (69) aufweist, wobei die beiden Teilabschnitte (67, 69) unmittelbar ineinander übergehen.

6. Stechschwert gemäß einem der Ansprüche 1-5, wobei eine als Abstand zwischen den beiden Einspannseiten (24, 26) gemessene Höhe des Stechschwerts (10) mindestens doppelt so groß ist wie eine als Abstand zwischen den beiden Längsseiten (20, 22) gemessene Breite des Stechschwerts (10).

7. Stechschwert gemäß einem der Ansprüche 1-6, wobei das Stechschwert (10) ferner eine zweite Schneidplatten-Aufnahme (36) aufweist, welche an einer zweiten der beiden Stirnseiten (30) des Stechschwerts (10) angeordnet ist.

8. Stechschwert gemäß einem der Ansprüche 1-7, wobei das Stechschwert (10) bezüglich eines Mittelpunkts punktsymmetrisch ausgestaltet ist.

## Claims

1. Parting blade (10), comprising:
two mutually opposite and mutually parallel longitudinal sides (20, 22) which extend between two mutually opposite clamping sides (24, 26) and two mutually opposite end sides (28, 30), wherein the longitudinal sides (20, 22) and the clamping sides (24, 26) run parallel to the longitudinal direction (16) of the parting blade (10), and the end sides (28, 30) run transversely to the longitudinal direction (16) of the parting blade (10), wherein each clamping side (24, 26) has at least one bevelled or wedge-shaped clamping face (24', 26') which, for clamping and longitudinally guiding the parting blade (10) in a parting blade mounting (32), runs parallel to the longitudinal direction (16);
a first cutting insert receptacle (34) which is disposed on one of the two end sides (28, 30) of the parting blade (10);
a cutting insert (14) which is able to be releasably fastened in the first cutting insert receptacle (34);
a coolant duct (48) having a first duct part (50) which extends between a holder inlet opening (54) that is disposed on one of the two longitudinal sides (20, 22), and a holder outlet opening (56) that opens into the first cutting insert receptacle (34), and having a second duct part (52) which in the interior of the cutting insert (14) extends between a cutting insert inlet opening (60) and a cutting insert outlet opening (62), wherein the holder outlet opening (56) and the cutting insert inlet opening (60) at least partially overlap one another such that, when the cutting insert (14) is fastened in the first cutting insert receptacle (34), the first duct part (50) transitions directly into the first duct part (52);
wherein the first cutting insert receptacle (34) has an upper clamping jaw (38) for bearing on an upper side (44) of the cutting insert (14), as well as a lower clamping jaw (40) for bearing on a lower side (46), opposite the upper side (44), of the cutting insert (14);
wherein the cutting insert (14) has a holder-proximal end side (70) and, opposite thereto, a workpiece-proximal end side (68), said end sides (68, 70) each running transversely to the upper side (44) and the lower side (46) of the cutting insert (14), wherein a blade edge (64) of the cutting insert (14) is disposed at the transition between the upper side (44) and the workpiece-proximal end side (68);
**characterized in that** the cutting insert (14), when the cutting insert (14) is fastened in the first cutting insert receptacle (34), by way of the upper side (44), the lower side (46) and the holder-proximal end side (70) bears on the first cutting insert receptacle (34), wherein the second duct part (52) is curved or comprises two sections (67, 69) that are angled relative to one another, and wherein the cutting insert inlet opening (60) is disposed on the holder-proximal end side (70) of the cutting insert (14).

2. Parting blade according to Claim 1, wherein the cutting insert (14) has a cutting edge (64) and, adjoining the latter, a cutting face (66), wherein the cutting insert outlet opening (62) is disposed in the cutting face (66).

3. Parting blade according to Claim 1 or 2, wherein the first cutting insert receptacle (34) is disposed so as to be closer to a first one of the two clamping sides (24) than a second one of the two clamping sides (26), and wherein the holder inlet opening (54) is disposed so as to be closer to the second clamping side (26) than the first clamping side (24).

4. Parting blade according to one of Claims 1 to 3, wherein the first duct part (50) is designed so as to be straight.

5. Parting blade according to Claim 4, wherein the second duct part (52) has a first straight sub-portion (67) and a second curved or angled sub-portion (69), wherein the two sub-portions (67, 69) transition directly into each other.

6. Parting blade according to one of Claims 1 to 5, wherein a height of the parting blade (10), measured as the spacing between the two clamping sides (24, 26), is at least double the size of a width of the parting blade (10), measured as the spacing between the two longitudinal sides (20, 22).

7. Parting blade according to one of Claims 1 to 6, wherein the parting blade (10) furthermore has a second cutting insert receptacle (36) which is disposed on a second one of the two end sides (30) of the parting blade (10).

8. Parting blade according to one of Claims 1 to 7, wherein the parting blade (10) is designed so as to be symmetrical with respect to a centre point.

## Revendications

1. Lame de rainurage (10), comprenant :
deux côtés longitudinaux (20, 22) qui sont opposés et parallèles entre eux et qui s'étendent entre deux côtés de serrage opposés (24, 26) et deux côtés frontaux opposés (28, 30), les côtés longitudinaux (20, 22) et les côtés de serrage (24, 26) s'étendant parallèlement à la direction longitudinale (16) de la lame de rainurage (10) et les côtés frontaux (28, 30) s'étendant transversalement à la direction longitudinale (16) de la lame de rainurage (10), chaque côté de serrage (24, 26) comportant au moins une surface de serrage (24', 26') biseautée ou en forme de coin qui s'étendent parallèlement à la direction longitudinale (16) et qui sont destinées à serrer et guider longitudinalement la lame de rainurage (10) dans un porte-lame (32),
un premier logement de plaquette de coupe (34) qui est disposé au niveau d'un premier des deux côtés frontaux (28, 30) de la lame de rainurage (10),
une plaquette de coupe (14) qui peut être fixée de manière amovible dans le premier logement de plaquette de coupe (34),
un conduit d'agent de refroidissement (48) pourvu d'une première partie de conduit (50) qui s'étend entre une ouverture d'entrée de support (54), qui est disposée au niveau de l'un des deux côtés longitudinaux (20, 22), et une ouverture de sortie de support (56) qui débouche dans le premier logement de plaquette de coupe (34), et d'une deuxième partie de conduit (52) qui s'étend à l'intérieur de la plaquette de coupe (14) entre une ouverture d'entrée de plaquette de coupe (60) et une ouverture de sortie de plaquette de coupe (62), l'ouverture de sortie de support (56) et l'ouverture d'entrée de plaquette de coupe (60) se chevauchant au moins partiellement de sorte que la première partie de conduit (50) se transforme directement en la deuxième partie de conduit (52) lorsque la plaquette de coupe (14) est fixée dans le premier logement de plaquette de coupe (34),
le premier logement de plaquette de coupe (34) comportant une mâchoire de serrage supérieure (38) destinée à venir en appui sur un côté supérieur (44) de la plaquette de coupe (14) ainsi qu'une mâchoire de serrage inférieure (40) destinée à venir en appui sur un côté inférieur (46) opposé au côté supérieur (44) de la plaquette de coupe (14),
la plaquette de coupe (14) comportant un côté frontal côté support (70) et un côté frontal opposé côté pièce (68), lesquels côtés s'étendent transversalement au côté supérieur (44) et au côté inférieur (46) de la plaquette de coupe (14), une arête de coupe (64) de la plaquette de coupe (14) étant disposée à la transition entre le côté supérieur (44) et le côté frontal côté pièce (68),
**caractérisée en ce que** le côté supérieur (44), le côté inférieur (46) et le côté frontal côté support (70) de la plaquette de coupe (14) viennent en appui sur le premier logement de plaquette de coupe (34) lorsque la plaquette de coupe (14) est fixée dans le premier logement de la plaquette de couple (34), la deuxième partie de conduit (52) étant incurvée ou présentant deux portions coudées entre elles (67,69), et l'ouverture d'entrée de plaquette de coupe (60) est disposée au niveau du côté frontal côté support (70) de la plaquette de coupe (14).

2. Lame de rainurage selon la revendication 1, la plaquette de coupe (14) comportant un bord de coupe (64) et une face de coupe (66) qui lui est adjacente, l'ouverture de sortie de plaquette de coupe (62) étant ménagée dans la face de coupe (66).

3. Lame de rainurage selon la revendication 1 ou 2, le premier logement de plaquette de coupe (34) étant disposé plus près d'un premier des deux côtés de serrage (24) que d'un deuxième des deux côtés de serrage (26), et l'ouverture d'entrée de support (54) étant ménagée plus près du deuxième côté de serrage (26) que du premier côté de serrage (24).

4. Lame de rainurage selon l'une des revendications 1 à 3, la première partie de conduit (50) étant rectiligne.

5. Lame de rainurage selon la revendication 4, la deuxième partie de conduit (52) comportant une première portion rectiligne (67) et une deuxième portion incurvée ou coudée (69), les deux portions (67, 69) se transformant directement l'une en l'autre.

6. Lame de rainurage selon l'une des revendications 1 à 5, la hauteur de la lame de rainurage (10), mesurée comme la distance entre les deux côtés de serrage (24, 26), étant au moins le double de la largeur de la lame de rainurage (10) mesurée comme la distance entre les deux côtés longitudinaux (20, 22).

7. Lame de rainurage selon l'une des revendications 1 à 6, la lame de rainurage (10) comportant également un deuxième logement de plaquette de coupe (36) qui est disposé au niveau d'un deuxième des deux côtés frontaux (30) de la lame de rainurage (10).

8. Lame de rainurage selon l'une des revendications 1 à 7, la lame de rainurage (10) étant à symétrie ponctuelle par rapport à un point central.
